# FASCICULE DE BREVET EUROPEEN

(11) **EP 3 531 729 B1**
(45) Date de publication et mention de la délivrance du brevet: **22.06.2022**
(21) Numéro de dépôt: 19159268.2
(22) Date de dépôt: 26.02.2019
(51) Int. Cl.: H04W 8/18, G06F 8/65

(54) **CONFIGURATION D'UN MODULE D'IDENTITÉ DE SOUSCRIPTEUR EMBARQUÉ**
KONFIGURATION EINES INTEGRIERTEN TEILNEHMERIDENTITÄTSMODULS
CONFIGURATION OF AN ON-BOARD SUBSCRIBER IDENTITY MODULE

(30) Priorité: 26.02.2018 FR 1851650
(43) Date de publication de la demande: 28.08.2019
(73) Titulaire: IDEMIA France, 92400 Courbevoie (FR)
(72) Inventeur: RABOISSON, Aurélien, 92400 COURBEVOIE (FR); DUMOULIN, Jérôme, 92400 COURBEVOIE (FR)
(74) Mandataire: Chauvin, Karen Laurence

(56) Documents cités:
- EP-A1- 2 448 216
- EP-A1- 3 023 904
- US-A1- 2007 288 531
- US-B1- 8 607 208
- US-B1- 9 053 107

## Description

L'invention se rapporte au domaine des télécommunications et concerne plus particulièrement les modules d'identité de souscripteur embarqués (typiquement une puce électronique, ou une carte à puce), appelés aussi éléments sécurisés ou SE, utilisés dans un terminal et permettant, par exemple, l'hébergement d'applications et de données de façon sécurisée dans un environnement de confiance.

Un module d'identité de souscripteur embarqué dans un terminal de télécommunications peut prendre plusieurs formes, et en particulier présenter divers facteurs de forme (formats). Ainsi, un module d'identité de souscripteur embarqué peut se présenter sous la forme d'une carte SIM (ou UICC pour « Universal Integrated Circuit Card ») ou d'une carte eSIM (pour « embedded SIM »), aussi appelée eUICC. Un autre exemple d'élément sécurisé est un élément sécurisé embarqué dit eSE (pour « embedded Secure Element), qui est généralement soudé au terminal hôte.

Par la suite, dans un souci de simplification de présentation, les principes de l'invention sont décrits dans le cadre d'une carte SIM. Ceci ne constitue nullement une limitation, les principes de l'invention étant applicables aux différents types d'éléments sécurisés (par exemple, carte SIM, eSIM, eUICC, SE, eSE ou combinaison d'éléments sécurisés).

L'invention concerne notamment la configuration d'un module d'identité de souscripteur embarqué afin d'éviter l'occurrence d'erreurs ou de bugs.

De façon connue, une carte SIM peut comprendre en mémoire des données d'utilisateur (clés, identifiants, etc.), appelées aussi données de souscripteur, accessibles par le système d'exploitation de ladite carte. Le système d'exploitation peut lire les données d'utilisateur au cours du fonctionnement de la carte SIM, par exemple, pour récupérer l'identifiant IMSI (pour « International Mobile Subscriber Identity ») de l'utilisateur dans un réseau mobile.

On sait par ailleurs mettre à jour le système d'exploitation d'une carte SIM afin, par exemple, d'améliorer le système d'exploitation, de supprimer des bugs ou d'ajouter de nouvelles fonctionnalités. Une telle mise à jour est toutefois susceptible d'engendrer des problèmes dans le fonctionnement de la carte SIM.

Il est en effet possible que le système d'exploitation, une fois mis à jour, requière un format ou un type différent de celui des données d'utilisateur qui sont effectivement stockées en mémoire dans la carte SIM. Suite à une mise à jour, les données d'utilisateur présentes dans la carte SIM peuvent ne plus être compatibles avec celles à présent attendues par le système d'exploitation, ce qui risque de poser des problèmes de fonctionnement et engendrer des erreurs.

A titre d'exemple, une mise à jour peut configurer le système d'exploitation d'une carte SIM de sorte à ce qu'il s'attende à lire un octet supplémentaire dans un fichier de configuration stocké dans les données d'utilisateur de ladite carte. Si cet octet n'est pas présent lors de la lecture du fichier, cela peut présenter un obstacle lors de la configuration du système d'exploitation. Selon un autre exemple, si une mise à jour du système d'exploitation de la carte SIM prévoit l'ajout d'une fonctionnalité, cette dernière ne pourra pas être mise en œuvre par le système d'exploitation si les fichiers nécessaires ne sont pas présents dans les données d'utilisateur, ce qui peut engendrer des erreurs et dégrader le fonctionnement de la carte SIM.

Un besoin existe pour pallier les problèmes et inconvénients mentionnés dans ce document, qui sont susceptibles d'être rencontrés par un quelconque module d'identité de souscripteur embarqué, tel qu'une carte SIM, eSIM, eUICC, eSE ou autre.

Le document EP 2 448 216 A1 traite de la gestion d'un module eUICC dans lequel peut être chargé une eSIM pour permettre l'authentification d'un utilisateur auprès d'un réseau de communication. En particulier, ce document décrit la possibilité de mettre à jour un système d'exploitation dans un module eUICC.

Le document EP 3 023 904 A1 porte sur la préparation d'un script à envoyer à un élément sécurisé comportant un stockage local de données de propriétés de fichier, pour fournir un profil à l'élément sécurisé.

Le document US 9 053 107 B1 divulgue un procédé pour déterminer des mises à jour de fichiers à partir d'une organisation des fichiers sur différents blocs dans un dispositif de stockage.

### Objet et résumé de l'invention

Comme expliqué ci-avant, des problèmes peuvent apparaître dans une carte SIM notamment lorsque son système d'exploitation est mis à jour, dans la mesure où une telle mise à jour peut modifier le format ou le type des données d'utilisateur requis par le système d'exploitation pour fonctionner de façon appropriée.

Or, lors d'une telle mise à jour du système d'exploitation, les données d'utilisateur susceptibles d'être stockées en mémoire dans la carte SIM ne sont pas modifiées par la mise à jour. L'accès aux données d'utilisateur lors d'une mise à jour du système d'exploitation n'est généralement pas possible pour des raisons notamment de droits d'accès et de confidentialité.

L'invention est défine par les revendications ci-jointes.

Une mise à jour d'une carte SIM peut donc avoir pour conséquence que les données d'utilisateur, stockées dans ladite carte, ne sont plus compatibles avec le système d'exploitation une fois ce dernier mis à jour.

L'invention vise donc à configurer un module d'identité de souscripteur embarqué, tel qu'une carte SIM, un module eUICC ou autre, de sorte à ce que son système d'exploitation soit capable de fonctionner de façon appropriée, en particulier lorsqu'une mise à jour du système d'exploitation (mais pas des données d'utilisateur) a été réalisée. Autrement dit, l'invention permet d'éviter que des erreurs surviennent à la suite notamment d'une mise à jour du système d'exploitation d'un module d'identité de souscripteur embarqué, en raison d'une incompatibilité entre le système d'exploitation et les données d'utilisateur.

A cet effet, la présente invention concerne un module d'identité de souscripteur embarqué, comprenant :
- une première zone mémoire configurée pour enregistrer en mémoire un système d'exploitation ; et
- une deuxième zone mémoire configurée pour enregistrer en mémoire des données d'utilisateur accessibles par le système d'exploitation ;
le module d'identité de souscripteur embarqué comprenant en outre :
- une troisième zone mémoire, distincte des première et deuxième zones mémoires, configurée pour enregistrer en mémoire un modèle de données définissant au moins un critère que doit satisfaire les données d'utilisateur contenues dans la deuxième zone mémoire ;
- un module de détermination configuré pour déterminer si lesdites données d'utilisateur sont conformes audit au moins un critère ; et
- un module de traitement configuré pour causer l'exécution d'au moins une première action prédéterminée, définie dans le modèle de données, si lesdites données d'utilisateur ne sont pas conformes audit au moins un critère.

Selon un mode de réalisation particulier, le module de détermination est configuré pour déterminer si lesdites données d'utilisateur sont conformes audit au moins un critère sur détection que le système d'exploitation a été mise à jour. Autrement dit, le module de détermination procède à ladite détermination en réponse à une détection de mise à jour du système d'exploitation.

Selon un mode de réalisation particulier, le module d'identité de souscripteur embarqué est configuré, si lesdites données d'utilisateur ne sont pas conformes audit au moins un critère, pour :
- consulter, dans la troisième zone mémoire, le modèle de données afin de déterminer ladite au moins une première action prédéterminée ; et
- causer l'exécution, par le système d'exploitation, de ladite au moins une première action prédéterminée.

Selon un mode de réalisation particulier, le système d'exploitation est configuré, si lesdites données d'utilisateurs sont conformes audit au moins un critère, pour exécuter au moins une deuxième action prédéterminée, différente de ladite première action prédéterminée.

Selon un mode de réalisation particulier, ladite au moins une deuxième action prédéterminée est définie dans le modèle de données en association avec lesdites données d'utilisateurs.

Selon un mode de réalisation particulier, ladite au moins une deuxième action prédéterminée n'est pas définie dans le modèle de données.

Selon un mode de réalisation particulier, ladite au moins une deuxième action prédéterminée n'est pas exécutée par le système d'exploitation.

Selon un mode de réalisation particulier, ladite au moins une deuxième action prédéterminée ne modifie pas les données d'utilisateur.

Selon un mode de réalisation, aucune consultation du modèle de données n'est réalisée pour déterminer ladite au moins une deuxième action prédéterminée. Ladite au moins une deuxième action est par exemple spécifiée dans le système d'exploitation.

Selon un mode de réalisation particulier, ledit au moins un critère comprend au moins l'un parmi :
- un type de donnée prédéterminé ;
- une longueur ou un format prédéterminé d'une chaîne de bits/bytes de donnée ;
- une position de bits/bytes prédéterminée dans une chaîne de bits/bytes de donnée ;
- une condition de présence (donnée effectivement présente ou pas en mémoire) indiquant si des données d'utilisateur doivent être présentes ou non dans la deuxième zone mémoire ;
- une localisation (par exemple, une adresse mémoire) dans la deuxième zone mémoire ;
- une valeur ;
- un seuil ;
- une valeur de contenu ;
- un état prédéterminé de données.

La liste de critères présentée ci-dessus est à titre illustratif et nullement limitative. D'autres types de critères pourraient être utilisés par l'homme du métier.

Selon un mode de réalisation particulier, le modèle de données définit une pluralité de critères que doivent satisfaire les données d'utilisateurs,
le module de détermination étant configuré pour déterminer si les données d'utilisateurs sont conformes à chacun desdits critères,
le module de traitement étant configuré pour réaliser au moins ladite au moins une première action prédéterminée, définie dans le modèle de données, si lesdites données d'utilisateurs ne sont pas conformes à au moins l'un desdits critères.

Selon un mode de réalisation particulier, le module d'identité de souscripteur embarqué comprend un module de mise à jour configuré pour :
- recevoir une commande de mise à jour comprenant des premières données de mise à jour relatives au système d'exploitation en association avec des deuxièmes données de mise à jour relatives au modèle de données ; et
- mettre à jour le système d'exploitation à partir des premières données de mise à jour et pour mettre à jour le modèle de données à partir des deuxièmes données de mise à jour.

Selon un mode de réalisation, le module de détermination est configuré pour déterminer si lesdites données d'utilisateurs présentes dans la deuxième zone mémoire sont conformes audit au moins un critère défini dans le modèle de données une fois ledit modèle de données mis à jour (i.e. en réponse à la mise à jour du modèle de données) à partir des deuxièmes données de mise à jour. Dans un exemple particulier, cette vérification réalisée par le module de détermination est réalisée sur la totalité des données d'utilisateurs présentes dans la deuxième zone mémoire.

Selon un mode de réalisation particulier, le module de détermination est configuré pour déterminer si lesdites données d'utilisateurs présentes dans la deuxième zone mémoire sont conformes audit au moins un critère défini dans le modèle de données une fois le système d'exploitation mis à jour (i.e. en réponse à la mise à jour du système d'exploitation) à partir des premières données de mise à jour. Dans un exemple particulier, cette vérification réalisée par le module de détermination est réalisée sur la totalité des données d'utilisateurs présentes dans la deuxième zone mémoire une fois le système d'exploitation mis à jour.

Selon un mode de réalisation particulier, le module de détermination est configuré pour déterminer si lesdites données d'utilisateurs présentes dans la deuxième zone mémoire sont conformes audit au moins un critère défini dans le modèle de données une fois que, et le système d'exploitation et le modèle de données soient mis à jour à partir, respectivement, des premières données de mise à jour et deuxièmes données de mise à jour (i.e. en réponse à ces deux mises à jour). Dans un exemple particulier, cette vérification réalisée par le module de détermination est réalisée sur la totalité des données d'utilisateurs présentes dans la deuxième zone mémoire une fois que le système d'exploitation et le modèle de données ont été mis à jour.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

L'invention vise également un procédé de traitement mis en œuvre par un module d'identité de souscripteur embarqué comportant :
- une première zone mémoire dans laquelle est enregistré un système d'exploitation ;
- une deuxième zone mémoire dans laquelle sont enregistrées des données d'utilisateur accessibles par le système d'exploitation ;
- une troisième zone mémoire, distincte des première et deuxième zones mémoires, dans laquelle est enregistré un modèle de données définissant au moins un critère que doit satisfaire les données d'utilisateur contenues dans la deuxième zone mémoire ;
le procédé comprenant les étapes suivantes :
- détermination de si lesdites données d'utilisateur sont conformes audit au moins un critère défini dans le modèle de données ; et
- déclenchement de l'exécution d'au moins une première action prédéterminée, définie dans le modèle de données, si lesdites données d'utilisateur ne sont pas conformes audit au moins un critère.

A noter que les différents modes de réalisation mentionnés ci-avant en relation avec le module d'identité de souscripteur embarqué de l'invention ainsi que les avantages associés s'appliquent de façon analogue au procédé de traitement de l'invention.

Selon un mode de réalisation, le procédé comprend :
- une mise à jour du système d'exploitation dans la première zone mémoire,
- dans lequel ladite détermination de si les données d'utilisateur sont conformes audit au moins un critère défini dans le modèle de données est réalisée sur détection que le système d'exploitation a été mise à jour.

Selon un mode de réalisation, l'étape de déclenchement comprend, si lesdites données d'utilisateur ne sont pas conformes audit au moins un critère :
- consultation, dans la troisième zone mémoire, du modèle de données pour déterminer ladite au moins une première action prédéterminée ; et
- déclenchement de l'exécution, par le système d'exploitation, de ladite au moins une première action prédéterminée.

Selon un mode de réalisation, le procédé est tel que, si lesdites données d'utilisateurs sont conformes audit au moins un critère, le système d'exploitation exécute au moins une deuxième action prédéterminée, différente de ladite première action prédéterminée.

Selon un mode de réalisation, le procédé comprend une consultation du modèle de données pour déterminer ladite au moins une deuxième action prédéterminée définie dans le modèle de données en association avec lesdites données d'utilisateurs.

Selon un mode de réalisation, aucune consultation du modèle de données n'est réalisée pour déterminer ladite au moins une deuxième action prédéterminée exécutée par le système d'exploitation.

Selon un mode de réalisation, ladite au moins une deuxième action prédéterminée n'est pas exécutée par le système d'exploitation.

Selon un mode de réalisation particulier, ladite au moins une deuxième action prédéterminée ne modifie pas lesdites données d'utilisateur.

Selon un mode de réalisation, ladite détermination de si lesdites données d'utilisateur sont conformes audit au moins un critère défini dans le modèle de données est réalisée sur détection que le modèle de données a été mis à jour à partir des deuxième données de mise à jour.

Selon un mode de réalisation, ledit au moins un critère comprend au moins l'un parmi :
- un type de donnée prédéterminé ;
- une longueur ou un format prédéterminé d'une chaîne de bits/bytes de donnée ;
- une position de bits/bytes prédéterminée dans une chaîne de bits/bytes de donnée ;
- une condition de présence (donnée effectivement présente ou pas en mémoire) indiquant que des données d'utilisateurs doivent être présentes ou non dans la deuxième zone mémoire ;
- une localisation (par exemple, adresse mémoire) dans la deuxième zone mémoire ;
- une valeur ;
- un seuil ;
- une valeur de contenu ; et
- un état prédéterminé de données.

La liste de critères ci-dessus est présentée à titre illustratif et est nullement limitative. D'autres types de critères pourraient être utilisés par l'homme du métier.

Selon un mode de réalisation, le procédé comprend en outre les étapes suivantes :
- réception d'une commande de mise à jour comprenant des premières données de mise à jour relatives au système d'exploitation en association avec des deuxièmes données de mise à jour relatives au modèle de données ; et
- mise à jour du système d'exploitation à partir des premières données de mise à jour et mise à jour du modèle de données à partir des deuxièmes données de mise à jour.

Selon un mode de réalisation particulier, ladite détermination de si lesdites données d'utilisateur sont conformes audit au moins un critère défini dans le modèle de données est réalisée sur détection que le modèle de données a été mis à jour à partir des deuxième données de mise à jour. Cette détermination porte par exemple sur toutes les données d'utilisateurs présentes dans la deuxième zone mémoire.

Selon un mode de réalisation, l'étape de détermination de si lesdites données d'utilisateurs présentes dans la deuxième zone mémoire sont conformes audit au moins un critère défini dans le modèle de données est réalisé en réponse à la mise à jour du système d'exploitation à partir des premières données de mise à jour. Dans un exemple particulier, cette étape de détermination est réalisée sur la totalité des données d'utilisateurs présentes dans la deuxième zone mémoire une fois le système d'exploitation mis à jour.

Selon un mode de réalisation, l'étape de détermination de si lesdites données d'utilisateurs présentes dans la deuxième zone mémoire sont conformes audit au moins un critère défini dans le modèle de données est réalisée en réponse à la mise à jour du système d'exploitation et du modèle de données à partir respectivement des premières données de mise à jour et des deuxièmes données de mise à jour. Dans un exemple particulier, cette étape de détermination est réalisée sur la totalité des données d'utilisateurs présentes dans la deuxième zone mémoire une fois que le système d'exploitation et le modèle de données ont été mis à jour.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un module d'identité de souscripteur embarqué, tel qu'une carte SIM ou un module eUICC, ou plus généralement dans un ordinateur, ce programme comportant des instructions adaptées à la mise en œuvre des étapes d'un procédé de traitement tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Le support peut comporter un moyen de stockage, tel qu'une ROM ou une mémoire Flash par exemple.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement un module d'identité de souscripteur embarqué ;
- la figure 2 représente, sous forme d'un diagramme, les étapes d'un procédé de traitement conforme à un mode de réalisation particulier de l'invention ;
- la figure 3 représente schématiquement des données d'utilisateurs stockées en mémoire dans un module d'identité de souscripteur embarqué, conformément à un mode de réalisation particulier de l'invention ;
- la figure 4 représente schématiquement un modèle de données, conformément à un mode de réalisation particulier de l'invention ;
- la figure 5 représente, sous forme d'un diagramme, les étapes d'un procédé de traitement conforme à un mode de réalisation particulier de l'invention ; et
- la figure 6 représente, sous forme d'un diagramme, les étapes d'un procédé de traitement conforme à un mode de réalisation particulier de l'invention.

### Description détaillée de plusieurs modes de réalisation

De façon connue, un module d'identité de souscripteur embarqué, tel qu'une carte SIM (pour « Subscriber Identity Module ») par exemple, est un dispositif électronique, contenant un microcontrôleur et une mémoire, qui peut être utilisé en téléphonie mobile pour stocker des informations spécifiques à un abonné d'un réseau mobile, notamment pour les réseaux GSM, UMTS et LTE par exemple. Un module d'identité de souscripteur embarqué permet également de stocker des données et des applications de l'utilisateur, de son opérateur ou, dans certains cas, de tierces parties.

Un module d'identité de souscripteur embarqué permet à un terminal de communication mobile (tel qu'un téléphone portable par exemple), avec lequel elle coopère, d'utiliser le réseau de communication mobile d'un seul opérateur de téléphonie. Pour ce faire, le module d'identité de souscripteur embarqué comprend des données de souscription comme par exemple un identifiant IMSI (pour « *International Mobile Subscriber Identity »*), des clés cryptographiques ou encore des algorithmes attribués par l'opérateur du réseau mobile.

La carte SIM, pouvant présenter divers facteurs de forme (formats), constitue un exemple de module d'identité de souscripteur embarqué au sens de l'invention, qui se caractérise notamment en ce qu'elle est amovible vis-à-vis de son terminal hôte. D'autres modules d'identité de souscripteur embarqués au sens de l'invention peuvent être fixées ou intégrés dans le terminal hôte, comme cela est le cas pour les cartes SIM embarquées (dites cartes eSIM ou cartes eUICC) ou encore pour les eSE déjà mentionné précédemment.

L'utilisation des cartes eSIM se développe depuis quelques années. Ces modules reprogrammables permettent à un utilisateur de changer d'opérateur sans avoir à remplacer physiquement la carte SIM dans le téléphone portable. Les principales spécifications d'un module eUICC sont définies par le groupe GSMA (pour « *Global System for Mobile Communications Association* ») dans le standard GSMA SGP.02 v3.2 intitulé « Remote Provisioning Architecture for Embedded UICC - Technical Specification - Version 3.2 » datant du 27 juin 2017 et dans le standard GSMA SGP.22 v2.2 intitulé « RSP Technical Specification - Version 2.2 » datant du 01 Septembre 2017. Un module eUICC est un élément matériel sécurisé, généralement de petite taille, pouvant être intégré dans un terminal de communication (dans un terminal mobile par exemple) afin de mettre en œuvre les fonctions d'une carte SIM traditionnelle. Dans ce document, des exemples de mise en œuvre de l'invention sont décrits dans le cadre d'une carte SIM. On comprend toutefois que l'invention peut s'appliquer plus généralement à un quelconque module d'identité de souscripteur embarqué, tel qu'une carte SIM, un module eUICC (ou eSIM), ou encore un eSE par exemple, comme déjà expliqué précédemment.

L'invention propose de configurer un module d'identité de souscripteur embarqué de sorte à éviter que des erreurs ou bugs surviennent, notamment suite à la mise à jour de son système d'exploitation. Pour ce faire, l'invention, selon différents modes de réalisation, met en œuvre un module d'identité de souscripteur embarqué stockant en mémoire un modèle de données permettant au système d'exploitation de déterminer si les données d'utilisateurs qui lui sont accessibles dans la mémoire dudit module sont conformes ou non à ce qui est attendu par le système d'exploitation, et permettant au système d'exploitation de se comporter de façon appropriée lorsque cela n'est pas le cas.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

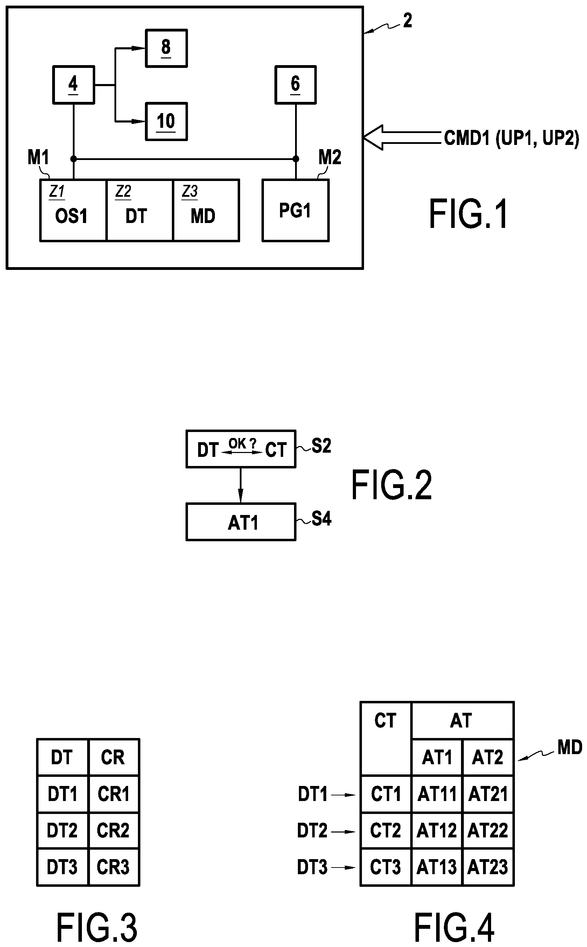

La **figure 1** représente schématiquement la structure d'un module d'identité de souscripteur embarqué 2, conforme à un mode de réalisation particulier. Dans cet exemple, ce module 2 est une carte SIM, bien que d'autres exemples soient possibles.

On suppose que cette carte SIM 2 est par exemple destinée à être embarquée dans un terminal mobile (non représenté sur la figure), tel qu'un téléphone mobile de type smartphone par exemple, de sorte à permettre à un utilisateur de s'authentifier auprès d'un réseau mobile. Le terminal mobile peut ainsi coopérer avec la carte SIM 2 afin d'accéder aux fonctionnalités (et/ou services) mises à disposition par le réseau mobile de l'opérateur concerné. La structure du terminal mobile et du réseau mobile n'est pas décrite en détail dans cet exemple de réalisation dans la mesure où cela n'est pas utile à la compréhension du principe de l'invention.

Comme représenté en **figure 1****,** la carte SIM 2 comprend un processeur 4, une première mémoire non-volatile M1, une deuxième mémoire non-volatile M2 et une interface de communication 6.

L'interface de communication 6 est configurée pour permettre à la carte SIM 2 de communiquer avec l'extérieur, en particulier ici avec un terminal de télécommunications mobile (non représenté) dans lequel la carte SIM peut être embarquée.

La mémoire non volatile M1 comprend dans cet exemple trois zones mémoire distinctes, à savoir : une première zone mémoire Z1, une deuxième zone mémoire Z2 et une troisième zone mémoire Z3. La première zone mémoire Z1 est configurée pour enregistrer en mémoire (i.e. stocker) un système d'exploitation, ou OS, noté OS1. La deuxième mémoire Z2 est configurée pour enregistrer en mémoire des données d'utilisateur DT accessibles par le système d'exploitation OS1. Enfin, la troisième zone mémoire Z3 est configurée pour enregistrer en mémoire un modèle de données MD qui est décrit ultérieurement.

La mémoire M1 est par exemple une mémoire non-volatile réinscriptible, de type Flash, EEPROM ou autre. Bien que les zones mémoires Z1 à Z3 sont ici représentées dans une même mémoire M1, on comprend que ces zones mémoires peuvent être formées dans des mémoires (ou dispositifs mémoire) distinctes. De façon générale, une zone mémoire au sens de l'invention peut être une mémoire dite logique ou/et physique. A titre d'exemple, les zones mémoires Z1, Z2 et Z3 au sens de l'invention peuvent chacune correspondre à une adresse spécifique au sein d'une seule et même mémoire physique (composant). Alternativement, chacune des zone mémoires Z1, Z2 et Z3 au sens de l'invention peut être dans une mémoire physique différente. Selon une autre variante, les zones mémoires Z1, Z2 et Z3 au sens de l'invention peuvent correspondre à 2 adresses mémoire distinctes au sein d'une même partition et à une troisième adresse au sein d'une autre partition ou bien encore à un mixte de configurations possibles entre mémoire logique et/ou physique (composant).

Le processeur 4 contrôle le fonctionnement de la carte SIM 2 en coopérant avec les autres composants internes de la carte SIM. En particulier, le processeur 4, mettant en œuvre le système d'exploitation OS1, accède aux données nécessaires dans les zones mémoire Z2 et Z3.

Les données d'utilisateurs DT (appelées aussi données de souscripteur) qui sont stockées dans la deuxième zone mémoire Z2 peuvent être de quelconque données propres à un utilisateur de la carte SIM 2. Les données d'utilisateur peuvent comprendre, par exemple, au moins l'un parmi : un identifiant IMSI (pour « International Mobile Subscriber Identity »), au moins une clé cryptographique et au moins un algorithme, tous ces éléments étant attribués par un opérateur d'un réseau mobile à l'utilisateur de la carte SIM 2.

Lorsqu'un terminal de communication mobile tente d'utiliser les services d'un réseau mobile, il peut envoyer les données d'utilisateur stockées dans la carte SIM 2 qui sont nécessaires à l'opérateur du réseau pour permettre l'accès aux services requis. L'opérateur peut ainsi authentifier l'utilisateur et vérifier à l'aide d'une base de données HLR (pour « Home Location Register ») que celui-ci a bien souscrit au service demandé.

Comme décrit ultérieurement, les données d'utilisateurs DT stockées dans la deuxième zone mémoire Z2 peuvent comprendre par exemple des métadonnées caractérisant lesdites données DT, en termes par exemple de format et/ou type, de taille ou longueur, de position, ou encore d'état (crypté/non cryptée etc.).

Le modèle de données MD, stocké dans la troisième zone mémoire Z3, est constitué d'un ensemble d'informations caractérisant les données d'utilisateurs DT stockées (ou censées être stockées) dans la deuxième zone mémoire Z2. Le modèle de données MD permet par exemple au système d'exploitation OS1 de déterminer quel type et/ou format doit, en théorie, respecter les données d'utilisateurs DT présentes dans la zone mémoire Z2. Pour ce faire, le modèle de données MD définit au moins un critère que doit respecter tout ou partie des données d'utilisateur DT. Ces critères définissent sous quelles formes les données d'utilisateur DT doivent se présenter pour que le système d'exploitation OS1 puisse les lire et les utiliser correctement. Ce critère comprend par exemple au moins une caractéristique (type, format, position, état ...) que doit respecter une ou des données d'utilisateurs DT.

Dans un mode de réalisation particulier, les donnée d'utilisateur DT sont situées dans une mémoire, de type sécurisée ou pas, hors du module d'identité de souscripteur embarqué, par exemple dans une mémoire du terminal de télécommunication mobile dans lequel est embarqué le module d'identité de souscripteur embarqué ou encore dans un serveur distant.

L'invention repose sur le principe que les données d'utilisateur DT ne se présentent pas nécessairement sous la forme requise par le système d'exploitation OS1 pour un fonctionnement normal ou optimal. Cette situation peut notamment se produire après une mise à jour du système d'exploitation OS1, dans la mesure où une telle mise à jour est susceptible de modifier notamment le format de données requis par le système d'exploitation pour un fonctionnement approprié. Dans certains cas, le type, le format, l'état, la longueur, la présence, la localisation et/ou la position des données d'utilisateur DT n'est pas conforme à ce qui est attendu par le système d'exploitation OS1. Comme décrit ultérieurement, ce modèle de données MD permet au système d'exploitation OS1 de détecter quand les données d'utilisateur DT ne sont pas conformes à ce qui est attendu et permet en outre au système d'exploitation OS1 de réagir de façon appropriée lorsqu'une telle situation se produit.

Comme représenté en **figure 1****,** la carte SIM 2 est par exemple configurée pour recevoir, par l'intermédiaire de son interface de communication 6, une commande de mise à jour CMD1 destinée à mettre à jour le système d'exploitation OS1 de la carte SIM 2. Comme indiqué par la suite, la commande de mise à jour CMD1 peut comporter des premières données de mise à jour UP1 relatives au système d'exploitation OS1, en association avec des deuxièmes données de mise à jour UP2 relatives au modèle de données MD. Ces données UP1 et UP2 permettent respectivement de mettre à jour le système d'exploitation OS1 et le modèle de données MD dans les zones mémoire correspondantes de la carte SIM 2.

Par ailleurs, la mémoire M2 est une mémoire non volatile réinscriptible ou une mémoire morte (ROM), cette mémoire constituant un support d'enregistrement (ou support d'informations) conforme à un mode de réalisation particulier, lisible par la carte SIM 2, et sur lequel est enregistré un programme d'ordinateur PG1 conforme à un mode de réalisation particulier. Ce programme d'ordinateur PG1 comporte des instructions pour l'exécution des étapes d'un procédé de traitement selon un mode de réalisation particulier, comme décrit ci-ultérieurement dans des exemples particuliers.

Comme représenté en **figure 1****,** le processeur 4 piloté par le programme d'ordinateur PG1 met ici en œuvre un module de détermination 8 et un module de traitement 10.

Le module de détermination 8 est configuré pour déterminer si les données d'utilisateur DT, stockées dans la deuxième zone mémoire Z2, sont conformes à au moins un critère défini dans le modèle de données MD.

Le module de traitement 10 est configuré pour causer l'exécution d'au moins une première action prédéterminée, définie dans le modèle de données MD, si tout ou partie des données d'utilisateur DT ne sont pas conformes audit au moins un critère.

Le fonctionnement de la carte SIM 2, et notamment des modules 8 et 10 mentionnés ci-dessus, apparaîtra plus précisément dans les exemples de réalisation décrits ci-après en référence aux **figures 3-6****.** On comprendra que les modules 8 et 10 tels que représentés en **figure 1** ne représentent qu'un exemple de mise en œuvre non limitatif de l'invention.

A noter également que certains éléments généralement présents dans une carte SIM ont été volontairement omis car ils ne sont pas nécessaires à la compréhension de la présente invention.

Les étapes d'un procédé de traitement selon un mode de réalisation particulier de l'invention sont à présents décrites en référence à la **figure 2****.** Ce procédé est mis en œuvre par la carte SIM 2, et plus particulièrement par le processeur 4 exécutant le programme d'ordinateur PG1. Ce procédé de traitement comprend les étapes suivantes :
- détermination (S2) de si les données d'utilisateur DT stockées dans la zone mémoire Z2 sont conformes à au moins un critère CT défini dans le modèle de données MD ; et
- déclenchement (S4) de l'exécution d'au moins une première action prédéterminée AT1, définie dans le modèle de données MD en association avec les données d'utilisateur DT concernées, si lesdites données d'utilisateur DT ne sont pas conformes audit au moins un critère.

Autrement dit, la carte SIM 2 vérifie en S2 si tout ou partie des données d'utilisateur DT est conforme à au moins un critère CT défini dans le modèle de données MD et, en cas de non-conformité, la carte SIM 2 exécute au moins une première action AT1 définie à cette fin dans le modèle de données MD. La ou les premières actions AT1 ainsi déclenchées peuvent être quelconques et peuvent être adaptées selon le cas d'usage.

Les étapes S2 et S4 précitées sont par exemple réalisées après que le système d'exploitation OS1 ait été mis à jour, par exemple en réponse à une commande de mise à jour CMD1 **(****figure 1****).** Les étapes S2 et S4 sont par exemple réalisées par la carte SIM 2 sur détection que le système d'exploitation OS1 a été mis à jour.

Ladite première action prédéterminée AT1 comprend par exemple une modification prédéterminée des données d'utilisateur DT non conformes.

Un but de l'invention est, dans cet exemple, de permettre au système d'exploitation OS1 de réagir de façon appropriée lorsque les données d'utilisateur DT présentes en zone mémoire Z2 ne sont pas (ou plus) sous la forme attendue, par exemple en raison d'une mise à jour du système d'exploitation OS2 comme déjà expliqué ci-avant.

L'invention permet avantageusement d'éviter que des erreurs ou bugs surviennent lorsque le système d'exploitation OS1 de la carte SIM 2 accède, dans la zone mémoire Z2, à des données d'utilisateur DT qui ne se trouvent pas sous la forme attendue ou requise par ledit système d'exploitation OS1.

La mise en œuvre d'un procédé de traitement selon un mode de réalisation particulier est à présent décrite en référence aux **figures 3-5****.** Ce procédé est mis en œuvre par la carte SIM 2 représenté en **figure 1****,** et plus particulièrement par le processeur 4 exécutant le programme d'ordinateur PG1.

On suppose, comme représentée en **figure 3****,** que les données d'utilisateurs DT stockées dans la deuxième zone mémoire Z2 comprennent ici des données DT1, DT2 et DT3. Les données d'utilisateur DT1, DT2 et DT3 présentent des caractéristiques respectives CR1, CR2 et CR3 (appelés collectivement CR). Ces caractéristiques défissent par exemple le format, le type, la longueur, la position, la localisation, la présence et/ou l'état (crypté/non crypté par exemple) des données d'utilisateur correspondantes. Dans un exemple particulier, les caractéristiques CR1-CR3 des données d'utilisateur DT1-DT3 sont accessibles par le système d'exploitation OS1 sous la forme de métadonnées stockées dans la deuxième zone mémoire Z2 en association avec les données d'utilisateurs DT correspondantes. Les données d'utilisateur DT stockées dans la zone mémoire Z2 comprend par exemple chacune des métadonnées caractérisant le type et/ou le format de données, la taille ou longueur des données, l'état crypté/non crypté, la position, la localisation, la présence etc.

A noter que, dans les exemples envisagés dans ce document, chacune des données d'utilisateur DT1, DT2 et DT3 **(****figure 3****)** peut comprendre une quantité quelconque de données. La nature du contenu de ces données peut également varier selon le cas, comme déjà expliqué.

On suppose en outre, comme représenté en **figure 4****,** que le modèle de données MD stocké dans la troisième zone mémoire Z3 comprend ici des informations caractérisant chacune des données d'utilisateurs DT1-DT3.

Plus précisément, le modèle de données MD définit des critères CT1, CT2 et CT3 (appelés collectivement CT) associés respectivement aux données d'utilisateur DT1, DT2 et DT3.

A noter que chacun des critères CT1-CT3 peut comprendre un ou une pluralité de critères s'appliquant aux données d'utilisateur DT correspondantes. A noter également qu'un même critère CT peut être défini dans le modèle de données MD pour au moins deux données d'utilisateurs DT distinctes. Par souci de simplicité, on suppose dans cet exemple représenté en **figures 3** et **4** que chaque critère CT est constitué d'un unique critère que des données d'utilisateur DT correspondantes doivent respecter.

Dans cet exemple, le modèle de données MD définit également des actions AT1 et AT2 (appelées collectivement AT) dites, respectivement, « premières actions » et « deuxièmes actions », en association avec chacune des données utilisateur DT1, DT2 et DT3. Plus précisément, comme représenté en **figure 4****,** on suppose ici que le modèle de données MD définit :
- une première action AT11 et une deuxième action AT21, en association avec les données d'utilisateur DT1 ;
- une première action AT12 et une deuxième action AT22, en association avec les données d'utilisateur DT2 ; et
- une première action AT13 et une deuxième action AT13, en association avec les données d'utilisateur DT3.

A noter que chacune des premières actions notées collectivement AT1 et chacune des deuxièmes actions notées collectivement AT2 peuvent comprendre une ou une pluralité d'actions prédéfinies. A noter également qu'une même action AT peut être définie dans le modèle de données MD pour au moins deux données d'utilisateurs DT distinctes. Par souci de simplicité, on suppose dans cet exemple représenté en **figures 3** et **4** que chaque première et deuxième action AT1, AT2 est constituée d'une unique action à effectuer par le système d'exploitation OS1.

Chaque première action AT1 au sens de l'invention définit une action que le système d'exploitation OS1 doit effectuer si les données d'utilisateur DT correspondantes ne sont pas conformes au critère CT applicable selon le modèle de données MD. Chaque première action prédéterminée AT1 peut être quelconque et peut comprendre, par exemple, une modification prédéterminée à réaliser sur des données d'utilisateur DT non-conformes.

Inversement, chaque deuxième action AT2 au sens de l'invention définit une action que le système d'exploitation OS1 doit effectuer si les données d'utilisateur DT correspondantes sont conformes au critère CT applicable selon le modèle de données MD. Chaque deuxième action prédéterminée peut être quelconque et, dans un exemple particulier, ne cause pas de modification des données d'utilisateurs DT correspondantes jugées conformes.

L'homme du métier appréciera donc la souplesse offerte par la faculté de pouvoir définir des premières actions AT1 et des deuxièmes actions AT2 de façon spécifique et dédiées à chacune des données d'utilisateurs DT considérée ou de façon commune à plusieurs données d'utilisateur DT distinctes.

De façon générale, le modèle de donnée MD peut définir au moins un critère CT en association avec au moins une première action AT1 et, éventuellement, avec au moins une deuxième action AT2.

Selon un mode de réalisation particulier, si aucune deuxième action AT2 n'est définie par le modèle de données MD pour des données d'utilisateur DT données, alors en cas de conformité des données d'utilisateur DT vis-à-vis du critère CT applicable, le système d'exploitation OS1 n'effectue aucune modification des données d'utilisateur DT.

Selon un mode de réalisation particulier, le modèle de donnée MD définit au moins un critère CT et au moins une deuxième action AT2, en association avec des données d'utilisateur DT mais aucune première action AT1. En cas de non-conformité de ces données d'utilisateur DT, le système d'exploitation OS1 ne modifie pas lesdites données d'utilisateur DT en question, et peut éventuellement envoyer un message d'erreur.

Selon un mode de réalisation particulier, le modèle de donnée MD définit au moins un critère CT en association avec des données d'utilisateur DT mais aucune première action AT1 ni aucune deuxième action AT2.

D'autres mode de réalisations sont toutefois possibles et n'ont pas été décrits ici par souci de simplicité et de clarté. Les modes de réalisations décrits dans ce document ne constituent donc nullement une limitation à ceux-ci pour la présente invention.

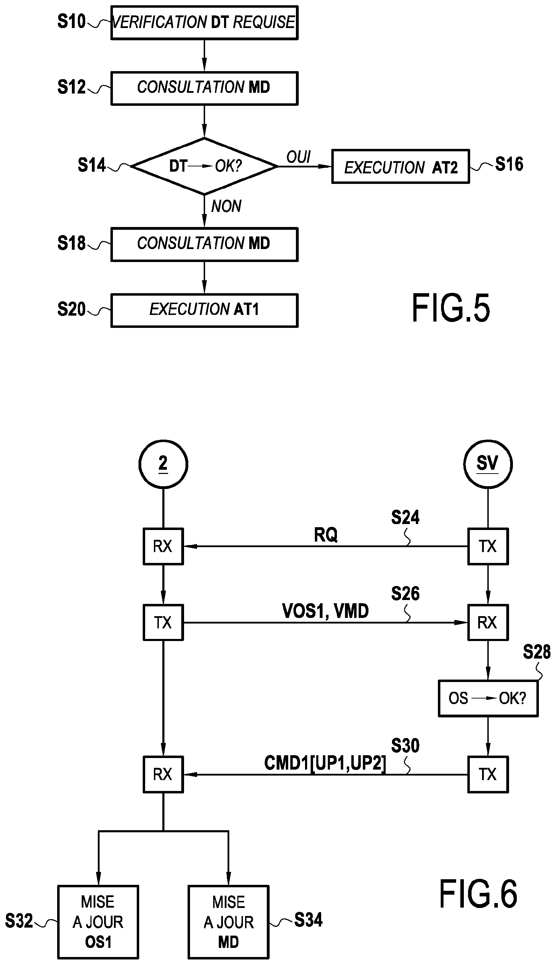

Le déroulement du procédé de traitement, selon un mode de réalisation particulier, mis en œuvre par la carte SIM 2 dans l'exemple représenté en **figures 3** et **4****,** est à présent décrit en référence à la **figure 5****.**

Au cours d'une étape S10, la carte SIM 2 détecte que la vérification de la conformité d'au moins une donnée d'utilisateur DT est requise. On suppose dans l'exemple qui suit que la vérification de la conformité des données d'utilisateur DT2 est requise.

Selon un exemple particulier, la carte SIM 2 détermine (S10) que la conformité des données d'utilisateur DT2 doit être vérifiée sur détection que le système d'exploitation OS1 a été mis à jour.

Selon un exemple particulier, préalablement à l'étape S10, la carte SIM 2 met à jour son système d'exploitation OS1, par exemple en réponse à la réception d'une commande de mise à jour de l'OS. La carte SIM 2 détermine (S10) alors que la conformité des données d'utilisateur DT2 doit être vérifiée sur détection que le système d'exploitation OS1 a été mis à jour. Dans un exemple particulier, la carte SIM 2 détermine (S10) alors que la vérification de la conformité de toutes les données d'utilisateur DT présentes dans la zone mémoire Z2 est requise. Lorsque le système d'exploitation OS1 est mis à jour, il est susceptible de changer de configuration et de nécessiter des données d'utilisateur DT différentes de celles qui étaient requises pour sa configuration antérieure. En vérifiant la conformité des données d'utilisateur DT suite à une mise à jour du système d'exploitation, il est possible d'éviter efficacement des problèmes d'incompatibilité entre le système d'exploitation mis à jour et les données d'utilisateur, comme déjà expliqué précédemment.

Selon un exemple particulier, la carte SIM 2 détermine (S10) que la conformité des données d'utilisateur DT2 doit être vérifiée sur détection qu'une lecture des données d'utilisateur DT2 est requise dans la zone mémoire Z2. La vérification de conformité est alors réalisée à la volée, à chaque fois que la lecture d'une donnée d'utilisateur DT est requise.

Dans l'exemple considéré ici, sur détection (S10) que la vérification de la conformité de la donnée d'utilisateur DT2 est requise, la carte SIM 2 consulte, au cours d'une étape de consultation S12, le modèle de données MD dans la troisième zone mémoire Z3 et détermine le ou les critères CT que doivent respecter, selon le modèle de données MD, les données d'utilisateur DT2. Dans cet exemple, la carte SIM 2 détecte donc en S12 que le critère CT2 est le critère applicable aux données d'utilisateur DT2, comme représenté en **figure 4****.**

Au cours d'une étape de détermination S14, la carte SIM 2 détermine si les données d'utilisateur DT2 dont la vérification est requise sont conformes au critère CT2 correspondant tel que défini dans le modèle de données MD. Pour ce faire, la carte SIM 2 accède aux données d'utilisateur DT2 dans la zone mémoire Z2 et compare celles-ci au critère applicable CT2 pour déterminer s'il y a conformité ou non. Si les données d'utilisateur DT2 sont détectées conformes à ce qui est spécifié dans le modèle de données MD, le procédé se poursuit en S16. Dans le cas contraire (non-conformité), le procédé se poursuit en S18.

Au cours de l'étape S18 (DT2 non conforme), la carte SIM 2 consulte à nouveau le modèle de données MD, dans la troisième zone mémoire Z3, pour déterminer ladite au moins une première action prédéterminée AT1 définie par le modèle de données MD en association avec les données d'utilisateur DT2, à savoir : l'action AT12 dans le cas présent.

Au cours d'une étape d'exécution S20, la carte SIM 2 exécute ensuite l'action prédéterminée AT12 conformément aux spécifications du modèle de données MD.

Cette première action prédéterminée AT12 peut comprendre la réalisation d'un quelconque jeu d'instructions (portion de programme) préenregistré dans le modèle de donnée MD. L'action prédéterminée AT12 peut comprendre une modification des données d'utilisateur DT2 par le système d'exploitation OS1. Le type de cette modification peut varier selon le cas (par exemple changement de longueur, changement de type, chiffrement de la donnée d'utilisateur, mise à jour de la valeur du contenu de la donnée d'utilisateur, ...).

Dans un exemple particulier, la carte SIM 2 détermine, lors de la première consultation en S12, ladite au moins une première action prédéterminée AT12 définie par le modèle de données MD en association avec les données d'utilisateur DT2. Dans ce cas, il est inutile de réaliser à nouveau cette opération en S18.

Si, en revanche, les données d'utilisateurs DT2 sont conformes au critère CT2 (étape S14 ; **figure 5****),** la carte SIM 2 fonctionne normalement, c'est-à-dire comme défini par exemple par le programme du système d'exploitation OS1. Dans un exemple particulier, le système d'exploitation OS1 cause l'exécution, lors de l'étape S16, d'au moins une deuxième action prédéterminée AT2, à savoir l'action AT22 dans le cas présent. Dans cette exemple, cette deuxième action prédéterminée AT22 est différente de ladite au moins une première action prédéterminée AT1 (à savoir, AT12 dans le cas présent) requise par le modèle de données MD en cas d'une détection (en S14) de non-conformité des données d'utilisateurs DT2.

Selon un exemple particulier, ladite au moins une deuxième action prédéterminée AT2 est définie dans le modèle de données MD en association avec les données d'utilisateur DT dont la vérification de conformité est requise. Le modèle de données MD peut définir de quelconques instructions permettant au système d'exploitation OS1 de déterminer l'action AT2 à réaliser en S16. Dans un exemple particulier, l'action AT2 est spécifiée dans le système d'exploitation OS1 et le modèle de données MD comprend une instruction commandant au système d'exploitation OS1 l'exécution de cette action. La carte SIM 2 peut consulter à nouveau le modèle de données MD pour déterminer AT2 ou a déjà déterminé AT2 lors de la consultation en S12.

Selon un autre exemple, ladite au moins une deuxième action prédéterminée AT2 n'est pas définie dans le modèle de données MD. Autrement dit, aucune consultation du modèle de données MD n'est réalisée (ou nécessaire) pour déterminer ladite au moins une deuxième action prédéterminée AT2 exécutée par le système d'exploitation OS1 en S16.

Dans un exemple particulier, ladite au moins une deuxième action prédéterminée AT2 réalisée en S16 est spécifiée dans le système d'exploitation OS1.

Des exemples particuliers appliqués au procédé de la **figure 2** ou **5** sont à présent décrits ci-dessous.
- Exemple 1 : si les données d'utilisateur DT sont détectées en S4/S14 comme n'ayant pas un type ou format conforme à celui spécifié par le modèle de données MD (par exemple, mauvais identifiant AID d'une applet, type de fichier incorrect : binaire, cyclique ou linéaire...), alors le système d'exploitation OS1 réalise un script prédéfini AT1 ou abandonne une opération de lecture des données DT concernées ;
- Exemple 2 : si les données d'utilisateur DT sont détectées en S4/S14 comme étant plus longues ou plus volumineuses qu'une valeur seuil prédéfinie L1 définie dans un critère CT, alors le système d'exploitation OS1 lit les n premiers ou derniers bits (ou octets) des données d'utilisateur DT concernées (n étant un entier naturel) et ignore les bits (ou octets) restants ;
- Exemple 3 : si les données d'utilisateur DT sont détectées en S4/S14 comme étant moins longues ou moins volumineuses qu'une valeur seuil prédéfinie L2 définie dans un critère CT, alors le système d'exploitation OS1 ajoute aux données d'utilisateur DT concernées autant de bit (ou byte), par exemple, nul (à l'état « 0 »), que de bits (ou bytes) manquants (technique dite de « padding ») afin d'obtenir des données d'utilisateur DT de la taille requise selon la valeur seuil L2 ;
- Exemple 4 : si les données d'utilisateur DT sont détectées en S4/S14 comme n'étant pas situées à une position prédéfinie dans la zone mémoire Z2 (adresse mémoire des données DT incorrectes), alors le système d'exploitation OS1 va chercher les données d'utilisateur DT concernées à une autre position prédéfinie dans la zone mémoire Z2 ou abandonne une opération de lecture desdites données d'utilisateurs, ou encore réalise un script prédéfini (exécution d'un calcul, prise en compte d'une valeur par défaut...).

Selon un exemple particulier représenté en **figure 6****,** le procédé de traitement représenté en **figure 2** ou **5** comprend en outre les étapes suivantes réalisées par la carte SIM 2 **(****figure 1****)** :
- réception (S30) d'une commande de mise à jour CMD1 comprenant des premières données de mise à jour UP1 relatives au système d'exploitation OS1 en association avec des deuxièmes données de mise à jour UP2 relatives au modèle de données MD ; et
- mise à jour (S32) du système d'exploitation OS1 à partir des premières données de mise à jour UP1 et mise à jour (S34) du modèle de données MD à partir des deuxièmes données de mise à jour UP2.

La commande de mise à jour CMD1 est, par exemple, reçue en S30 depuis un serveur distant SV, par l'intermédiaire d'un terminal de communication mobile dans lequel est embarqué (ou avec lequel coopère) la carte SIM 2.

Il est ainsi possible, à partir des données UP1 comprises dans la commande CMD1 reçue, de mettre à jour le système d'exploitation OS1 afin, par exemple, de corriger des bugs ou ajouter de nouvelles fonctionnalités. Il est en outre possible, à partir des données UP2 comprises dans la commande CMD1 reçue, de mettre à jour le modèle de données MD afin que ce dernier spécifie au système d'exploitation OS1 la forme des données d'utilisateurs DT attendue (critère CT) ainsi que le traitement à réaliser (première action AT1) dans le cas où les données d'utilisateur DT ne seraient pas conformes à ce qui est attendu par le système d'exploitation OS1. Ces mises à jour du système d'exploitation OS1 et du modèle MD sont réalisées sans que les données d'utilisateur DT soient mises à jour.

Une fois les étapes S32 et S34 réalisées, le système d'exploitation OS1 est capable d'utiliser les données d'utilisateur DT dans la zone mémoire Z2 à l'aide du modèle de données MD mis à jour.

De manière générale, la commande de mise à jour CMD1 reçue en S30 par la carte SIM 2 peut comprendre au moins l'une parmi les données UP1 et les données UP2, décrites ci-dessus.

Selon un mode de réalisation particulier, la commande de mise à jour CMD1 comprend uniquement les premières données de mise à jour UP1 relatives au système d'exploitation OS1. La carte SIM 2 réalise alors la mise à jour S32 de l'OS1 à partir des données UP1 mais ne réalise pas l'étape S34. Une fois l'étape S32 réalisée, le système d'exploitation OS1 mis à jour est alors capable d'utiliser les données d'utilisateur DT dans la zone Z2 à l'aide du modèle de données MD.

Selon un mode de réalisation particulier, la commande de mise à jour CMD1 comprend uniquement les deuxièmes données de mise à jour UP2 relatives au modèle de données MD. La carte SIM 2 réalise alors la mise à jour S34 du modèle MD à partir des données UP2 mais ne réalise pas l'étape S32. Une fois l'étape S34 réalisée, le système d'exploitation OS1 est alors capable d'utiliser les données d'utilisateur DT dans la zone Z2 à l'aide du modèle de données MD mis à jour.

Selon un exemple particulier, la carte SIM 2 détecte en S10 **(****figure 5****)** qu'une vérification de la conformité de données d'utilisateur DT est requise (éventuellement, de toutes les données d'utilisateur présentes dans la deuxième zone mémoire Z2), sur détection d'une mise à jour du modèle de données MD et/ou d'une mise à jour du système d'exploitation OS1.

Tout ou partie des étapes représentées en **figure 6** peut être réalisé avant exécution de l'étape S2 **(****figure 2****)** ou S10 **(****figure 5****),** telles que décrites précédemment. Il est ainsi possible, pour l'opérateur d'un réseau mobile par exemple, de mettre à jour le système d'exploitation OS1 de la carte SIM 2 et/ou le modèle de données MD et de configurer le système d'exploitation OS1 de sorte à gérer les situations où les données d'utilisateur stockées en mémoire ne seraient plus compatibles avec le système d'exploitation OS1.

Selon un exemple particulier **(****figure 6****),** préalablement à l'étape S30, la carte SIM 2 reçoit (S24) une requête RQ de mise à jour en provenance du serveur distant SV. En réponse à cette requête RQ, la carte SIM 2 envoie (S26) audit serveur SV la version VOS1 du système d'exploitation OS1 stocké dans la zone mémoire Z1, et éventuellement aussi la version VMD du modèle de données MD stocké dans la zone mémoire Z3. Le serveur distant SV détermine alors (S28), à partir de VOS1 (et éventuellement VMD), si le système d'exploitation OS1 est à jour et, dans la négative, envoie en S30 la commande de mise à jour CMD1 **(****figure 1****),** comme déjà décrit. Cette commande CMD1 comprend par exemple un fichier de mise à jour du système d'exploitation OS1 et du modèle de données MD. Ce fichier de mise à jour comprend ici les données de mise à jour UP1 et UP2 relatives respectivement au système d'exploitation OS1 et au modèle de données MD, comme déjà expliqué. La carte SIM 2 procède alors comme déjà indiqué ci-dessus : réception (S30) de la commande de mise à jour CMD1, puis mise à jour (S32) du système d'exploitation OS1 et mise à jour (S34) du modèle de données MD, et ce sans modifier les données d'utilisateurs DT.

Selon un exemple particulier, la carte SIM 2 envoie en S26 **(****figure 6****)** l'un au moins parmi VOS1 et VMD au serveur SV. Le serveur SV détermine alors en S28, à partir de VOS1 et/ou VMD si le système d'exploitation OS1 dans Z1 et/ou le modèle de données MD dans Z3 sont respectivement à jour et, dans la négative, envoie en S30 la commande de mise à jour CMD1 **(****figure 1****)** comprenant au moins l'un parmi UP1 et UP2 nécessaire pour la mise à jour.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Module d'identité de souscripteur embarqué (2), comprenant :
- une première zone mémoire (Z1) configurée pour enregistrer en mémoire un système d'exploitation (OS1) ; et
- une deuxième zone mémoire (Z2) configurée pour enregistrer en mémoire des données d'utilisateur (DT) accessibles par le système d'exploitation (OS1) ;
le module d'identité de souscripteur embarqué étant **caractérisé en ce qu'**il comprend en outre :
- une troisième zone mémoire (Z3), distincte des première et deuxième zones mémoires (Z1, Z2), configurée pour enregistrer en mémoire un modèle de données (MD) définissant :
∘ au moins un critère (CT) que doit satisfaire les données d'utilisateur (DT) contenues dans la deuxième zone mémoire (Z2) ;
∘ au moins une première action prédéterminée (AT1) en association avec les données d'utilisateur ;
- un module de détermination (8) configuré pour déterminer si lesdites données d'utilisateur (DT) sont conformes audit au moins un critère (CT) ; et
- un module de traitement (10) configuré, si lesdites données d'utilisateur (DT) ne sont pas conformes audit au moins un critère, pour :
∘ consulter, dans la troisième zone mémoire (Z3), le modèle de données (MD) afin de déterminer ladite au moins une première action prédéterminée ; et
∘ causer l'exécution de ladite au moins une première action prédéterminée (AT1), définie dans le modèle de données (MD).

2. Module d'identité de souscripteur embarqué selon la revendication 1, dans lequel le module de détermination est configuré pour déterminer si lesdites données d'utilisateur (DT) sont conformes audit au moins un critère sur détection que le système d'exploitation a été mise à jour.

3. Module d'identité de souscripteur embarqué selon la revendication 1 ou 2, dans lequel le système d'exploitation (OS1) est configuré, si lesdites données d'utilisateurs (DT) sont conformes audit au moins un critère, pour exécuter au moins une deuxième action prédéterminée, différente de ladite première action prédéterminée.

4. Module d'identité de souscripteur embarqué selon la revendication 3, dans lequel ladite au moins une deuxième action prédéterminée est définie dans le modèle de données (MD) en association avec lesdites données d'utilisateurs.

5. Module d'identité de souscripteur embarqué selon l'une quelconque des revendications 1 à 4, dans lequel ledit au moins un critère comprend au moins l'un parmi :
- un type de donnée prédéterminé ;
- une longueur ou un format prédéterminé d'une chaîne de bits ou bytes de donnée ;
- une position de bits ou bytes prédéterminée dans une chaîne de bits ou bytes de donnée ;
- une condition de présence indiquant que des données d'utilisateurs doivent être présentes ou non dans la deuxième zone mémoire (Z2) ;
- une localisation dans la deuxième zone mémoire ;
- une valeur ;
- un seuil ;
- une valeur de contenu ; et
- un état prédéterminé de données.

6. Module d'identité de souscripteur embarqué selon l'une quelconque des revendications 1 à 5, dans lequel le modèle de données définit une pluralité de critères que doivent satisfaire les données d'utilisateurs,
le module de détermination étant configuré pour déterminer si les données d'utilisateurs sont conformes à chacun desdits critères,
le module de traitement étant configuré pour réaliser au moins ladite au moins une première action prédéterminée, définie dans le modèle de données (MD), si lesdites données d'utilisateurs (DT) ne sont pas conformes à au moins l'un desdits critères.

7. Module d'identité de souscripteur embarqué selon l'une quelconque des revendications 1 à 6, comprenant un module de mise à jour configuré pour :
- recevoir une commande de mise à jour comprenant des premières données de mise à jour (UP1) relatives au système d'exploitation (OS1) en association avec des deuxièmes données de mise à jour (UP2) relatives au modèle de données (MD) ; et
- mettre à jour le système d'exploitation (OS1) à partir des premières données de mise à jour (UP1) et mettre à jour le modèle de données à partir des deuxièmes données de mise à jour (UP2).

8. Module d'identité de souscripteur embarqué selon la revendication 7, dans lequel le module de détermination (8) est configuré pour déterminer si lesdites données d'utilisateurs présentes dans la deuxième zone mémoire (Z2) sont conformes audit au moins un critère défini dans le modèle de données une fois ce dernier mis à jour à partir des deuxièmes données de mise à jour.

9. Procédé de traitement mis en œuvre par un module d'identité de souscripteur embarqué (2) comportant :
- une première zone mémoire (Z1) dans laquelle est enregistré un système d'exploitation (OS1) ; et
- une deuxième zone mémoire (Z2) dans laquelle sont enregistrées des données d'utilisateur (DT) accessibles par le système d'exploitation (OS1) ;
le procédé étant **caractérisé en ce que** le module d'identité de souscripteur embarqué (2) comporte en outre :
- une troisième zone mémoire (Z3), distincte des première et deuxième zones mémoires (Z1, Z2), dans laquelle est enregistré un modèle de données (MD) définissant :
∘ au moins un critère (CT) que doit satisfaire les données d'utilisateur (DT) contenues dans la deuxième zone mémoire (Z2) ; et
∘ au moins une première action prédéterminée (AT1) en association avec les données d'utilisateur ;
le procédé comprenant les étapes suivantes :
- détermination de si lesdites données d'utilisateur (DT) sont conformes audit au moins un critère (CT) défini dans le modèle de données (MD) ; et
- si lesdites données d'utilisateur (DT) ne sont pas conformes audit au moins un critère :
∘ consultation, dans la troisième zone mémoire (Z3), du modèle de données (MD) afin de déterminer ladite au moins une première action prédéterminée ; et
∘ déclenchement de l'exécution de ladite moins une première action prédéterminée (AT1), définie dans le modèle de données (MD).

10. Procédé selon la revendication 9, comprenant une mise à jour du système d'exploitation (OS1) dans la première zone mémoire (Z1),
dans lequel ladite détermination de si les données d'utilisateur (DT) sont conformes audit au moins un critère défini dans le modèle de données est réalisée sur détection que le système d'exploitation a été mise à jour.

11. Procédé selon l'une la revendication 9 ou 10, dans lequel, si lesdites données d'utilisateurs (DT) sont conformes audit au moins un critère, le système d'exploitation exécute au moins une deuxième action prédéterminée (AT2), différente de ladite première action prédéterminée.

12. Procédé selon l'une quelconque des revendications 9 à 11, comprenant en outre les étapes suivantes :
- réception d'une commande de mise à jour comprenant des premières données de mise à jour (UP1) relatives au système d'exploitation (OS1) en association avec des deuxièmes données de mise à jour (UP2) relatives au modèle de données (MD) ; et
- mise à jour du système d'exploitation (OS1) à partir des premières données de mise à jour (UP1) et mise à jour du modèle de données à partir des deuxièmes données de mise à jour (UP2).

13. Procédé selon la revendication 12, dans lequel ladite détermination de si lesdites données d'utilisateur (DT) sont conformes audit au moins un critère défini dans le modèle de données (MD) est réalisée sur détection que le modèle de données a été mis à jour à partir des deuxième données de mise à jour.

14. Programme d'ordinateur (PG1) comportant des instructions pour l'exécution des étapes d'un procédé de traitement selon l'une quelconque des revendications 9 à 13 lorsque ledit programme est exécuté par un ordinateur associé à un module d'identité de souscripteur embarqué.

## Patentansprüche

1. Integriertes Teilnehmeridentitätsmodul (2), umfassend:
- einen ersten Speicherbereich (Z1), der zum Speichern eines Betriebssystems (OS1) im Speicher konfiguriert ist; und
- einen zweiten Speicherbereich (Z2), der zum Speichern von dem Betriebssystem (OS1) zugänglichen Benutzerdaten (DT) im Speicher konfiguriert ist;
wobei das integrierte Teilnehmeridentitätsmodul **dadurch gekennzeichnet ist, dass** es ferner umfasst:
- einen dritten Speicherbereich (Z3), der sich vom ersten und zweiten Speicherbereich (Z1, Z2) unterscheidet und zum Speichern eines Datenmodells (MD) im Speicher konfiguriert ist, das Folgendes definiert:
o mindestens ein Kriterium (CT), das die in dem zweiten Speicherbereich (Z2) enthaltenen Benutzerdaten (DT) erfüllen muss;
o mindestens eine erste vorbestimmte Aktion (AT1), die mit den Benutzerdaten in Verbindung steht;
- ein Bestimmungsmodul (8), das zum Bestimmen, ob die Benutzerdaten (DT) das mindestens eine Kriterium (CT) erfüllen, konfiguriert ist; und
- ein Verarbeitungsmodul (10), das dazu konfiguriert ist, wenn die Benutzerdaten (DT) das mindestens eine Kriterium nicht erfüllen:
o Abfragen, im dritten Speicherbereich (Z3), des Datenmodells (MD), um die mindestens eine erste vorbestimmte Aktion zu bestimmen; und
o Veranlassen der Ausführung der mindestens einen ersten vorbestimmten Aktion (AT1), die in dem Datenmodell (MD) definiert ist.

2. Integriertes Teilnehmeridentitätsmodul nach Anspruch 1, wobei das Bestimmungsmodul dazu konfiguriert ist, wenn erkannt wurde, dass das Betriebssystem aktualisiert wurde, zu bestimmen, ob die Benutzerdaten (DT) das mindestens eine Kriterium erfüllen.

3. Integriertes Teilnehmeridentitätsmodul nach Anspruch 1 oder 2, wobei das Betriebssystem (OS 1) dazu konfiguriert ist, wenn die Benutzerdaten (DT) das mindestens eine Kriterium erfüllen, mindestens eine zweite vorbestimmte Aktion auszuführen, die sich von der ersten vorbestimmten Aktion unterscheidet

4. Integriertes Teilnehmeridentitätsmodul nach Anspruch 3, wobei die mindestens eine zweite vorbestimmte Aktion in Verbindung mit den Benutzerdaten in dem Datenmodell (MD) definiert ist.

5. Integriertes Teilnehmeridentitätsmodul nach einem der Ansprüche 1 bis 4, wobei das mindestens eine Kriterium mindestens eines von Folgendem umfasst:
- einen vorbestimmten Datentyp;
- eine vorbestimmte Länge oder ein vorbestimmtes Format einer Kette von Datenbits oder -bytes;
- eine vorbestimmte Position von Bits oder Bytes in einer Kette von Datenbits oder -bytes;
- eine Präsenzbedingung, die angibt, dass Benutzerdaten in dem zweiten Speicherbereich (Z2) vorliegen müssen oder nicht;
- einen Speicherort im zweiten Speicherbereich;
- einen Wert;
- einen Schwellenwert;
- einen Inhaltswert; und
- einen vorbestimmten Zustand der Daten.

6. Integriertes Teilnehmeridentitätsmodul nach einem der Ansprüche 1 bis 5, wobei das Datenmodell eine Vielzahl von Kriterien definiert, welche die Benutzerdaten erfüllen müssen,
wobei das Bestimmungsmodul zum Bestimmen, ob die Benutzerdaten jedes der Kriterien erfüllen, konfiguriert ist,
wobei das Verarbeitungsmodul konfiguriert ist, um mindestens die mindestens eine erste vorbestimmte Aktion, die in dem Datenmodell (MD) definiert ist, auszuführen, wenn die Benutzerdaten (DT) mindestens eines der Kriterien nicht erfüllen.

7. Integriertes Teilnehmeridentitätsmodul nach einem der Ansprüche 1 bis 6, umfassend ein Aktualisierungsmodul, das konfiguriert ist zum:
- Empfangen eines Aktualisierungsbefehls, der erste Aktualisierungsdaten (UP1) bezüglich des Betriebssystems (OS1) in Verbindung mit zweiten Aktualisierungsdaten (UP2) bezüglich des Datenmodells (MD) umfasst; und
- Aktualisieren des Betriebssystems (OS1) anhand der ersten Aktualisierungsdaten (UP1) und Aktualisieren des Datenmodells anhand der zweiten Aktualisierungsdaten (UP2).

8. Integriertes Teilnehmeridentitätsmodul nach Anspruch 7, wobei das Bestimmungsmodul (8) konfiguriert ist, um zu bestimmen, ob die im zweiten Speicherbereich (Z2) vorliegenden Benutzerdaten das mindestens eine im Datenmodell definierte Kriterium erfüllen, nachdem letzteres anhand der zweiten Aktualisierungsdaten aktualisiert wurde.

9. Verarbeitungsverfahren, das von einem integriertem Teilnehmeridentitätsmodul (2) ausgeführt wird, umfassend:
- einen ersten Speicherbereich (Z1), in dem ein Betriebssystem (OS1) gespeichert ist; und
- einen zweiten Speicherbereich (Z2), in dem durch das Betriebssystem (OS1) zugängliche Benutzerdaten (DT) gespeichert sind;
wobei das Verfahren **dadurch gekennzeichnet ist, dass** das integrierte Teilnehmeridentitätsmodul (2) ferner umfasst:
- einen dritten Speicherbereich (Z3), der sich vom ersten und zweiten Speicherbereich (Z1, Z2) unterscheidet und in dem ein Datenmodell (MD) gespeichert ist, das Folgendes definiert:
o mindestens ein Kriterium (CT), das die in dem zweiten Speicherbereich (Z2) enthaltenen Benutzerdaten (DT) erfüllen muss; und
o mindestens eine erste vorbestimmte Aktion (AT1), die mit den Benutzerdaten in Verbindung steht;
wobei das Verfahren die folgenden Schritte umfasst:
- Bestimmen, ob die Benutzerdaten (DT) das mindestens eine Kriterium (CT) erfüllen, das in dem Datenmodell (MD) definiert ist; und
- wenn die Benutzerdaten (DT) das mindestens eine Kriterium nicht erfüllen:
o Abfragen des Datenmodells (MD) im dritten Speicherbereich (Z3), um die mindestens eine erste vorbestimmte Aktion zu bestimmen; und
o Auslösen der Ausführung der mindestens einen ersten vorbestimmten Aktion (AT1), die in dem Datenmodell (MD) definiert ist.

10. Verfahren nach Anspruch 9, umfassend eine Aktualisierung des Betriebssystems (OS1) im ersten Speicherbereich (Z1),
wobei die Bestimmung, ob die Benutzerdaten (DT) das mindestens eine Kriterium, das in dem Datenmodell definiert ist, erfüllen, erfolgt, wenn erkannt wurde, dass das Betriebssystem aktualisiert wurde.

11. Verfahren nach einem der Ansprüche 9 oder 10, wobei, wenn die Benutzerdaten (DT) das mindestens eine Kriterium erfüllen, das Betriebssystem mindestens eine zweite vorbestimmte Aktion (AT2) ausführt, die sich von der ersten vorbestimmten Aktion unterscheidet.

12. Verfahren nach einem der vorstehenden Ansprüche 9 bis 11, ferner die folgenden Schritte umfassend:
- Empfangen eines Aktualisierungsbefehls, der erste Aktualisierungsdaten (UP1) bezüglich des Betriebssystems (OS1) in Verbindung mit zweiten Aktualisierungsdaten (UP2) bezüglich des Datenmodells (MD) umfasst; und
- Aktualisieren des Betriebssystems (OS1) anhand der ersten Aktualisierungsdaten (UP1) und Aktualisieren des Datenmodells anhand der zweiten Aktualisierungsdaten (UP2).

13. Verfahren nach Anspruch 12, wobei die Bestimmung, ob die Benutzerdaten (DT) mit dem mindestens einen Kriterium, das in dem Datenmodell (MD) definiert ist, übereinstimmen, erfolgt, wenn erkannt wurde, dass das Datenmodell anhand der zweiten Aktualisierungsdaten aktualisiert wurde.

14. Computerprogramm (PG1), umfassend Anweisungen zur Ausführung der Schritte eines Verarbeitungsverfahrens nach einem der Ansprüche 9 bis 13 während der Ausführung des Programms durch einen mit einem integrierten Teilnehmeridentitätsmodul in Verbindung stehenden Computer.

## Claims

1. An onboard subscriber identity module (2), comprising:
- a first memory zone (Z1) configured to record an operating system (OS1) in memory; and
- a second memory zone (Z2) configured to record in memory user data (DT) accessible by the operating system (OS1);
the onboard subscriber identity module being **characterized in that** it further comprises:
- a third memory zone (Z3), separate from the first and second memory zones (Z1, Z2), configured to record in memory a data model (MD) defining:
∘ at least one criterion (CT) that the user data (DT) contained in the second memory zone (Z2) must satisfy;
∘ at least a first predetermined action (AT1) in association with the user data;
- a determination module (8) configured to determine if said user data (DT) are in accord with said at least one criterion (CT); and
- a processing module (10) configured, if said user data (DT) are not in accord with said at least one criterion, to:
∘ consult, in the third memory zone (Z3), the data model (MD) in order to determine said at least one first predetermined action; and
∘ cause the execution of said at least one first predetermined action (AT1), defined in the data model (MD).

2. The onboard subscriber identity module according to claim 1, wherein the determination module is configured to determine if said user data (DT) are in accord with said at least one criterion upon detecting that the operating system has been updated.

3. The onboard subscriber identity module according to claim 1 or 2, wherein the operating system (OS1) is configured, if said user data (DT) are in accord with said at least one criterion, to execute at least one second predetermined action, different from said first predetermined action.

4. The onboard subscriber identity module according to claim 3, wherein said at least one second predetermined action is defined in the data model (MD) in association with said user data.

5. The onboard subscriber identity module according to any one of claims 1 to 4, wherein said at least one criterion comprises at least one from among:
- a predetermined data type;
- a predetermined length or format of a string of data bits or bytes;
- a predetermined position of bits or bytes in a string of data bits or bytes;
- an occupancy condition indicating that user data must be present or not in the second memory zone (Z2);
- a location in the second memory zone;
- a value;
- a threshold;
- a content value; and
- a predetermined data status.

6. The onboard subscriber identity module according to any one of claims 1 to 5, wherein the data model defines a plurality of criteria that the user data must satisfy,
the determination module being configured to determine if said user data are in accord with each of said criteria,
the processing module being configured to carry out at least said at least one first predetermined action, defined in the data model (MD), if said user data (DT) are not in accord with at least one of said criteria.

7. The onboard subscriber identity module according to any one of claims 1 to 6, comprising an updating module configured to:
- receive an updating command comprising first update data (UP1) relative to the operating system (OS1) in association with second update data (UP2) relative to the data model (MD); and
- update the operating system (OS1) from first update data (UP1) and update the data model from second update data (UP2).

8. The onboard subscriber identity module according to claim 7, wherein the determination module (8) is configured to determine if said user data present in the second memory zone (Z2) are in accord with said at least one criterion defined in the data model once said model is updated from the second update data.

9. A processing method implemented by an onboard subscriber identity module (2) comprising:
- a first memory zone (Z1) wherein an operating system (OS1) is recorded; and
- a second memory zone (Z2) wherein user data (DT) accessible by the operating system (OS1) are recorded;
the method being **characterized in that** the onboard subscriber identity module (2) further comprises:
- a third memory zone (Z3), separate from the first and second memory zones (Z1, Z2), wherein a data model (MD) is recorded defining:
∘ at least one criterion (CT) that the user data (DT) contained in the second memory zone (Z2) must satisfy; and
∘ at least a first predetermined action (AT1) in association with the user data;
the method comprising the following steps:
- determining if said user data (DT) are in accord with said at least one criterion (CT) defined in the data model (MD); and
- if said user data (DT) are not in accord with said at least one criterion:
∘ consulting, in the third memory zone (Z3), of the data model (MD) in order to determine said at least one first predetermined action; and
∘ triggering the execution of said at least one first predetermined action (AT1), defined in the data model (MD).

10. The method according to claim 9, comprising an updating of the operating system (OS1) in the first memory zone (Z1),
wherein said determining if the user data (DT) are in accord with said at least one criterion defined in the data model is carried out upon detecting that the operating system has been updated.

11. The method according to claim 9 or 10, wherein, if said user data (DT) are in accord with said at least one criterion, the operating system executes at least one second predetermined action (AT2), different from said first predetermined action.

12. The method according to any one of claims 9 to 11, further comprising the following steps:
- receiving an updating command comprising first update data (UP1) relative to the operating system (OS1) in association with second update data (UP2) relative to the data model (MD); and
- updating the operating system (OS1) from first update data (UP1) and updating the data model from second update data (UP2).

13. The method according to claim 12, wherein said determining if the user data (DT) are in accord with said at least one criterion defined in the data model (MD) is carried out upon detecting that the data model has been updated from second updating data.

14. A computer program (PG1) comprising instructions for executing the steps of a processing method according to any one of claims 9 to 13, when said program is executed by a computer associated with an onboard subscriber identity module.
